# EUROPEAN PATENT APPLICATION

(11) **EP 4 083 121 A1**
(43) Date of publication of application: **02.11.2022**
(21) Application number: 20907102.6
(22) Date of filing: 03.12.2020
(51) Int. Cl.: C08J 5/24, C08F 299/06

(54) **PREPREG AND MOLDED ARTICLE**

(30) Priority: 25.12.2019 JP 2019234217
(71) Applicant: DIC Corporation, Tokyo 174-8520 (JP)
(72) Inventor: KATOU Naoki, Takaishi-shi, Osaka 592-0001 (JP); SHINCHI Tomoaki, Takaishi-shi, Osaka 592-0001 (JP)
(74) Representative: TBK
(86) International application number: PCT/JP2020/044971
(87) International publication number: WO 2021/131566

(57) **Abstract**

Provided is a prepreg containing a urethane (meth)acrylate (A), a polymerization initiator (B), and reinforcement fibers (C), characterized in that the polymerization initiator (B) is an alkyl peroxy ester compound having a 10-hour half-life temperature of 60°C or higher and lower than 70°C. The prepreg has excellent storage stability and excellent moldability, even under the low-temperature molding condition of 110°C or lower, and enables to obtain a molded article having excellent physical properties such as interlaminar shear strength. Therefore, the prepreg can be suitably used in automobile components, railway vehicle components, aerospace craft components, ship components, housing equipment components, sporting components, light vehicle components, building and civil engineering components, and casings of OA equipment and the like.

## Description

### Technical Field

The present invention relates to a prepreg and a molded article thereof.

### Background Art

Fiber-reinforced resin composite materials reinforced with reinforcement fibers such as carbon fibers and glass fibers have been receiving attention because they have the characteristics of good heat resistance and mechanical strength despite light weight. They have been increasingly used in various structures, including casings and various components of automobiles and aircraft. Examples of the method for molding such a fiber-reinforced resin composite material include a method in which an intermediate material referred to as a prepreg, in which reinforcement fibers are impregnated with a thermosetting resin, is cured and molded by autoclave molding or press molding.

Resins for prepregs are usually required to have both stability at normal temperature and curability by heating or the like. Thus, in general, thermosetting resins such as epoxy resin compositions have been frequently used. Prepregs containing epoxy resins, however, have a problem of needing to be kept in cold storage because curing proceeds at normal temperature.

In order to solve this problem, a molding material capable of achieving high productivity and stability at normal temperature has been under development (for example, refer to Patent Literature 1) . This molding material, which contains a urethane (meth)acrylate having a specific structure, a polymerization initiator, and carbon fibers, however, poses a problem in that since a high temperature of 130°C or higher is required for molding, its applicable use is limited.

Accordingly, there has been a demand for a material which has excellent storage stability and which enables to obtain a molded article having excellent strength and the like even under the molding condition of 110°C or lower.

### Citation List

### Patent Literature

PTL 1: International Publication No. 2017/163899

### Summary of Invention

### Technical Problem

A problem to be solved by the present invention is to provide a prepreg which has excellent storage stability and excellent moldability, even under the low-temperature molding condition of 110°C or lower, and which enables to obtain a molded article having excellent physical properties such as interlaminar shear strength, and to provide a molded article thereof.

### Solution to Problem

The present inventors have found that the problem described above can be solved by a prepreg containing, as essential components, a urethane (meth)acrylate, a specific polymerization initiator, and reinforcement fibers, thus completing the present invention.

That is, the present invention relates to a prepreg containing a urethane (meth)acrylate (A), a polymerization initiator (B), and reinforcement fibers (C), characterized in that the polymerization initiator (B) is an alkyl peroxy ester compound having a 10-hour half-life temperature of 60°C or higher and lower than 70°C.

### Advantageous Effects of Invention

Molded articles obtained from the prepreg of the present invention are excellent in terms of flexural strength, interlaminar shear strength, and the like, and therefore can be suitably used, for example, in automobile components, railway vehicle components, aerospace craft components, ship components, housing equipment components, sporting components, light vehicle components, building and civil engineering components, and casings of OA equipment and the like.

### Description of Embodiments

A prepreg of the present invention contains a urethane (meth)acrylate (A), a polymerization initiator (B), and reinforcement fibers (C), in which the polymerization initiator (B) is an alkyl peroxy ester compound having a 10-hour half-life temperature of 60°C or higher and lower than 70°C.

The urethane (meth)acrylate (A) has a urethane bond and a (meth)acryloyl group and can be obtained, for example, by allowing a polyisocyanate (a1) to react with a hydroxyl group-containing compound (a2) having, as an essential starting material, a compound (a2-1) having a hydroxyl group and a (meth)acryloyl group.

From the viewpoint of high adhesion and further improvement in interfacial shear strength with carbon fibers, the polyisocyanate (a1) preferably includes one or more polyisocyanates selected from the group consisting of 2,4'-diphenylmethane diisocyanate, 4,4'-diphenylmethane diisocyanate, carbodiimide-modified 4,4'-diphenylmethane diisocyanate, and polymethylene polyphenyl polyisocyanate, and more preferably includes polymethylene polyphenyl polyisocyanate.

Other examples of the polyisocyanate (a1) that can be used include aromatic polyisocyanates, such as nurate-modified diphenylmethane diisocyanate, biuret-modified diphenylmethane diisocyanate, urethane imine-modified diphenylmethane diisocyanate, polyol-modified diphenylmethane diisocyanate modified with a polyol having a number-average molecular weight of 1,000 or less, such as diethylene glycol or dipropylene glycol, tolylene diisocyanate (TDI), tolidine diisocyanate, xylylene diisocyanate, 1,5-naphthalene diisocyanate, and tetramethylxylene diisocyanate; alicyclic polyisocyanates, such as isophorone diisocyanate (IPDI), hydrogenated diphenylmethane diisocyanate, hydrogenated xylylene diisocyanate, and norbornene diisocyanate; and aliphatic polyisocyanates, such as hexamethylene diisocyanate, nurate-modified hexamethylene diisocyanate, biuret-modified hexamethylene diisocyanate, hexamethylene diisocyanate adducts, and dimer acid diisocyanate.

These polyisocyanates (a1) can be used molded body or in combination of two or more.

The hydroxyl group-containing compound (a2) has, as an essential starting material, a compound (a2-1) having a hydroxyl group and a (meth)acryloyl group.

Examples of the compound (a2-1) having a hydroxyl group and a (meth)acryloyl group include hydroxyalkyl (meth)acrylates and epoxy (meth)acrylate. Note that these compounds (a2-1) having a hydroxyl group and a (meth)acryloyl group can be used alone or in combination of two or more.

Examples of the hydroxyalkyl (meth)acrylates include 2-hydroxyethyl (meth)acrylate, 3-hydroxypropyl (meth)acrylate, 4-hydroxy-n-butyl (meth)acrylate, 2-hydroxypropyl (meth)acrylate, 2-hydroxy-n-butyl (meth)acrylate, and 3-hydroxy-n-butyl (meth)acrylate, and preferred is 2-hydroxyethyl (meth)acrylate. Note that these hydroxyalkyl (meth)acrylates can be used alone or in combination of two or more.

The epoxy (meth)acrylate can be obtained by allowing an epoxy resin to react with (meth)acrylic acid and/or (meth)acrylic anhydride.

Furthermore, as the hydroxyl group-containing compound (a2), from the viewpoint that the toughness of the resulting molded articles is further improved, another polyol (a2-2) other than the compound (a2-1) having a hydroxyl group and a (meth)acryloyl group is preferably also used.

Examples of the other polyol (a2-2) include polyether polyols, polyester polyols, polycarbonate polyols, and polyalkylene polyols.

The molar ratio (NCO/OH) of the isocyanate group (NCO) of an isocyanate compound (a1) to the hydroxyl group (OH) of a hydroxyl group-containing compound (a2), the isocyanate compound and the hydroxyl group-containing compound being starting materials of the urethane (meth)acrylate (A), is preferably 0.1 to 1.5, and more preferably 0.3 to 1.2.

The polymerization initiator (B) is an alkyl peroxy ester compound having a 10-hour half-life temperature of 60°C or higher and lower than 70°C, from the viewpoint that the prepreg has excellent storage stability and excellent moldability, even under the molding condition of 110°C or lower, and enables to obtain a molded article having excellent interlaminar shear strength and the like. Examples thereof include 1,1,3,3-tetramethylbutyl peroxy-2-ethylhexanoate, 2,5-dimethyl-2,5-hexanediyl=bis(2-ethylperoxyhexanoate), and tert-hexyl=2-ethylhexaneperoxoate. Note that these alkyl peroxy ester compounds can be used alone or in combination of two or more.

The content of the polymerization initiator (B) is preferably in the range of 0.3 to 3% by mass in the prepreg components excluding the reinforcement fibers (C), from the viewpoint of excellent balance between storage stability and curing characteristics.

In the prepreg of the present invention, in the range that does not impair the advantageous effects of the present invention, another polymerization initiator other than the polymerization initiator (B) may also be used. Examples of the other polymerization initiator include diacyl peroxide compounds, peroxy ester compounds, hydroperoxide compounds, ketone peroxide compounds, alkyl perester compounds, percarbonate compounds, and peroxyketals.

Examples of the reinforcement fibers (C) include carbon fibers, glass fibers, silicon carbide fibers, alumina fibers, boron fibers, metal fibers, and organic fibers, such as aramid fibers, vinylon fibers, and Tetoron fibers. From the viewpoint that molded articles having higher strength and higher elasticity can be obtained, carbon fibers or glass fibers are preferable, and carbon fibers are more preferable. These reinforcement fibers (C) may be used in one kind or in combination of two or more kinds.

As the carbon fibers, various kinds, such as polyacrylonitrile-based, pitch-based, and rayon-based carbon fibers, can be used. Of these, from the viewpoint that high-strength carbon fibers can be easily obtained, polyacrylonitrile-based carbon fibers are preferable.

The form of the reinforcement fibers (C) is not particularly limited. Examples thereof include reinforcement fiber tows in which reinforcement fiber filaments are bundled together, unidirectional fiber materials in which reinforcement fiber tows are arranged in parallel in one direction, woven fabrics or reinforcement fibers that are cut into short lengths, and nonwoven fabrics and paper formed of reinforcement fibers that are cut into short lengths. When unidirectional fiber materials are used as the reinforcement fibers, by stacking and molding the unidirectional fiber materials, high mechanical properties can be obtained, which is preferred.

In the case where reinforcement fibers that are cut into short lengths are used, from the viewpoint that in-mold flowability during molding and the appearance of molded articles are further improved, it is preferable to use carbon fibers cut into 2.5 to 50 mm pieces.

In the case of woven fabrics, examples thereof include plain fabrics, twill fabrics, satin fabrics, and stitched sheets, such as non-crimp fabrics, in which sheets formed of fiber bundles arranged in parallel in one direction or sheets stacked at different stacking angles are stitched together in order to avoid separation.

The weight of the reinforcement fibers (weight per square meter of the fibers) is not particularly limited, but is preferably 10 g/m² to 650 g/m². When the weight is 10 g/m² or more, the variation in fiber width becomes small, leading to better mechanical properties, which is preferred. When the weight is 650 g/m² or less, resin impregnation is improved, which is preferred. The weight is more preferably 50 to 500 g/m², and particularly preferably 50 to 300 g/m².

The content of the reinforcement fibers (C) in the prepreg of the present invention is preferably in the range of 20 to 85% by mass, and more preferably in the range of 40 to 80% by mass, from the viewpoint that the mechanical strength of the resulting molded articles is further improved.

The prepreg of the present invention may contain components other than those described above. Examples of components that can be incorporated into the prepreg include radically polymerizable monomers, thermosetting resins, thermoplastic resins, polymerization inhibitors, curing accelerators, fillers, low profile additives, mold release agents, thickeners, viscosity depressants, pigments, antioxidants, plasticizers, flame retardants, antimicrobial agents, ultraviolet stabilizers, reinforcement materials, and photo-curing agents.

Examples of the radically polymerizable monomers include styrene compounds, such as styrene, methylstyrene, halogenated styrene, and divinylbenzene; monofunctional (meth)acrylate compounds, such as methyl (meth)acrylate, ethyl (meth)acrylate, propyl (meth)acrylate, butyl (meth)acrylate, 2-ethylhexyl (meth)acrylate, cyclohexyl (meth)acrylate, isobornyl (meth)acrylate, benzyl (meth)acrylate, methylbenzyl (meth)acrylate, phenoxyethyl (meth)acrylate, methylphenoxyethyl (meth)acrylate, morpholine (meth)acrylate, phenylphenoxyethyl acrylate, phenylbenzyl (meth)acrylate, phenyl methacrylate, dicyclopentenyl (meth)acrylate, dicyclopentenyloxyethyl (meth)acrylate, and dicyclopentanyl methacrylate; hydroxyl group-containing (meth)acrylate compounds, such as hydroxyethyl (meth)acrylate, hydroxypropyl (meth)acrylate, and hydroxybutyl (meth)acrylate; di(meth)acrylate compounds, such as ethylene glycol di(meth)acrylate, propylene glycol di(meth)acrylate, 1,4-butanediol di(meth)acrylate, 1,6-hexanediol di(meth)acrylate, bisphenol di(meth)acrylate, polytetramethylene glycol di(meth)acrylate, ethoxylated bisphenol A di(meth)acrylate, and 1,4-cyclohexanedimethanol di(meth)acrylate; and multifunctional di(meth)acrylate compounds, such as trimethylolpropane tri(meth)acrylate, ethoxylated isocyanuric acid tri(meth)acrylate, and pentaerythritol tri(meth)acrylate. These can be used alone or in combination of two or more.

Of these radically polymerizable monomers, from the viewpoint of odor in the working environment and further improvement in mechanical strength of molded bodies, monofunctional and bifunctional (meth)acrylates having a molecular weight of 150 to 1,000 are preferable; phenoxyethyl (meth)acrylate, methylphenoxyethyl (meth)acrylate, benzyl (meth)acrylate, methylbenzyl (meth)acrylate, polytetramethylene glycol di(meth)acrylate, and ethoxylated bisphenol A di(meth)acrylate are more preferable; and phenoxyethyl (meth)acrylate, benzyl (meth)acrylate, and ethoxylated bisphenol A di(meth)acrylate are still more preferable.

The mass ratio of the urethane (meth)acrylate (A) to the radically polymerizable monomer (urethane (meth)acrylate (A)/radically polymerizable monomer) is preferably 95/5 to 50/50, and more preferably 95/5 to 70/30, from the viewpoint of handleability in the working environment and further improvement in mechanical strength of molded bodies.

Examples of the thermosetting resins include vinyl ester resins, unsaturated polyester resins, phenolic resins, melamine resins, and furan resins. These thermosetting resins can be used alone or in combination of two or more.

Examples of the thermoplastic resins include polyamide resins, polyethylene terephthalate resins, polybutylene terephthalate resins, polycarbonate resins, urethane resins, polypropylene resins, polyethylene resins, polystyrene resins, acrylic resins, polybutadiene resins, polyisoprene resins, and resins obtained by modifying these resins by copolymerization or the like. Of these, polyamide resins and urethane resins are preferable. These thermoplastic resins can be used alone or in combination of two or more. Furthermore, the thermoplastic resins may be added in the form of particles or may be melted and mixed for use. In the case where the thermoplastic resins in the form of particles are used, from the viewpoint of dispersibility into fibers, the particle size is preferably 30 µm or less, and more preferably 20 µm.

Examples of the polymerization inhibitors include hydroquinone, trimethylhydroquinone, p-t-butylcatechol, t-butylhydroquinone, toluhydroquinone, p-benzoquinone, naphthoquinone, hydroquinone monomethyl ether, phenothiazine, copper naphthenate, and copper chloride. These polymerization inhibitors can be used alone or in combination of two or more.

Examples of the curing accelerators include metal soaps, such as cobalt naphthenate, cobalt octenoate, vanadyl octenoate, copper naphthenate, and barium naphthenate; and metal chelate compounds, such as vanadyl acetyl acetate, cobalt acetyl acetate, and iron acetylacetonate. Examples of amines include N,N-dimethylamino-p-benzaldehyde, N,N-dimethylaniline, N,N-diethylaniline, N,N-dimethyl-p-toluidine, N-ethyl-m-toluidine, triethanolamine, m-toluidine, diethylenetriamine, pyridine, phenylmorpholine, piperidine, and diethanolaniline. These curing accelerators can be used alone or in combination of two or more.

As the fillers, inorganic compounds and organic compounds can be used to adjust the physical properties, such as strength, elastic modulus, impact strength, and fatigue durability, of molded articles.

Examples of the inorganic compounds include calcium carbonate, magnesium carbonate, barium sulfate, mica, talc, kaolin, clay, Celite, asbestos, barite, baryta, silica, silica sand, dolomite limestone, gypsum, fine aluminum powder, hollow balloons, alumina, glass powder, aluminum hydroxide, white limestone, zirconium oxide, antimony trioxide, titanium oxide, molybdenum dioxide, and iron powder.

Examples of the organic compounds include powders of natural polysaccharides, such as cellulose and chitin; and powders of synthetic resins. As the powders of synthetic resins, powders of organic materials, such as hard resins, soft rubber, elastomers, or polymers (copolymers), and particles having a multilayer structure, such as a core-shell structure, can be used. Specific examples include acrylic particles, polyamide particles, particles of butadiene rubber and/or acrylic rubber, urethane rubber, silicon rubber, and the like, polyimide resin powder, fluororesin powder, and phenolic resin powder. These fillers can be used alone or in combination of two or more.

Examples of the mold release agents include zinc stearate, calcium stearate, paraffin wax, polyethylene wax, and carnauba wax. Preferred examples include paraffin wax, polyethylene wax, and carnauba wax. These mold release agents can be used alone or in combination of two or more.

Examples of the thickeners include metal oxides and metal hydroxides, such as magnesium oxide, magnesium hydroxide, calcium oxide, and calcium hydroxide; and acrylic resin-based fine particles. These can be appropriately selected depending on the handleability of the prepreg of the present invention. These thickeners can be used alone or in combination of two or more.

The prepreg of the present invention is produced by step 1 in which the reinforcement fibers (C) are impregnated with a resin solution prepared by mixing the polyisocyanate (a1), the compound (a2-1) having a hydroxyl group and a (meth)acryloyl group, the other polyol (a2-2), and the polymerization initiator (B), for example, by using a known mixer, such as a planetary mixer or a kneader, then a release PET film is arranged on an upper surface thereof, and rolling is performed with a rolling mill to obtain a sheet; and by step 2 in which the sheet is left to stand at normal temperature to 50°C to allow the isocyanate groups of the polyisocyanate (a1) to react with the hydroxyl groups of the compound (a2-1) having a hydroxyl group and a (meth)acryloyl group and the other polyol (a2-2). Furthermore, in step 1, within the range not impairing the impregnation property into the fibers, it may be possible to use a solution in which the polyisocyanate (a1), the compound (a2-1) having a hydroxyl group and a (meth)acryloyl group, and the other polyol (a2-2) are allowed to partially react in advance.

The thickness of the prepreg of the present invention is preferably 0.02 to 1.0 mm. When the thickness is 0.02 mm or more, handling for stacking is facilitated, which is preferable. When the thickness is 1 mm or less, good impregnation with the resin is achieved, which is preferable. The thickness is more preferably 0.05 to 0.5 mm.

As a method for obtaining a molded article from the resulting prepreg described above, for example, the following method is used: The release PET film is separated from the prepreg. After 8 to 16 sheets of the prepreg are stacked, the stacked sheets are charged into a mold which is preheated to 100 to 120°C, and clamping is performed with a compression molding machine to shape the prepreg. A molding pressure of 0.1 to 10 MPa is maintained to cure the prepreg. Then, a molded article is removed. In this case, preferred is a production method in which the stack is subjected to compression molding under heating in a mold having a shear edge at a mold temperature of 100°C to 120°C for a specified time of 1 to 2 minutes per millimeter of the thickness of the molded article, while maintaining a molding pressure of 1 to 8 MPa.

Molded articles obtained from the prepreg of the present invention are excellent in terms of flexural strength, interlaminar shear strength, and the like, and therefore can be suitably used, for example, in automobile components, railway vehicle components, aerospace craft components, ship components, housing equipment components, sporting components, light vehicle components, building and civil engineering components, and casings of OA equipment and the like.

### EXAMPLES

The present invention will be described in more detail below by specific examples. Note that the gel time was measured with a Curelastometer 7 TYPE P (manufactured by JSR Trading Co., Ltd).

### (Preparation Example 1: Preparation of resin composition (1) for prepreg)

50 Parts by mass of a mixture of polymethylene polyphenyl polyisocyanate and MDI ("Millionate MR-200" manufactured by Tosoh Corporation), 50 parts by mass of 4,4'-diphenylmethane diisocyanate, 66 parts by mass of HEMA, 25 parts by mass of NEWPOL BPE-20 (manufactured by Sanyo Chemical Industries, Ltd.: EO adduct of bisphenol A, hydroxyl equivalent; 164 g/eq), 31 parts by mass of NEWPOL BPE-40 (manufactured by Sanyo Chemical Industries, Ltd.: EO adduct of bisphenol A, hydroxyl equivalent; 204 g/eq), and 3 parts by mass of a polymerization initiator ("Kayaester TMPO-70" by Kayaku Nouryon Corporation, 1,1,3,3-tetramethylbutyl peroxy-2-ethylhexanoate) were mixed to obtain a resin composition (1) for prepreg.

### (Preparation Example 2: Preparation of resin composition (R1) for prepreg)

50 Parts by mass of a mixture of polymethylene polyphenyl polyisocyanate and MDI ("Millionate MR-200" manufactured by Tosoh Corporation), 50 parts by mass of 4,4'-diphenylmethane diisocyanate, 66 parts by mass of HEMA, 25 parts by mass of NEWPOL BPE-20 (manufactured by Sanyo Chemical Industries, Ltd.: EO adduct of bisphenol A, hydroxyl equivalent; 164 g/eq), 31 parts by mass of NEWPOL BPE-40 (manufactured by Sanyo Chemical Industries, Ltd.: EO adduct of bisphenol A, hydroxyl equivalent; 204 g/eq), and 3 parts by mass of a polymerization initiator ("Kayaester O" by Kayaku Nouryon Corporation, tert-butyl peroxy-2-ethylhexanoate) were mixed to obtain a resin composition (R1) for prepreg.

### (Preparation Example 3: Preparation of resin composition (R2) for prepreg)

50 Parts by mass of a mixture of polymethylene polyphenyl polyisocyanate and MDI ("Millionate MR-200" manufactured by Tosoh Corporation), 50 parts by mass of 4,4'-diphenylmethane diisocyanate, 66 parts by mass of HEMA, 25 parts by mass of NEWPOL BPE-20 (manufactured by Sanyo Chemical Industries, Ltd.: EO adduct of bisphenol A, hydroxyl equivalent; 164 g/eq), 31 parts by mass of NEWPOL BPE-40 (manufactured by Sanyo Chemical Industries, Ltd.: EO adduct of bisphenol A, hydroxyl equivalent; 204 g/eq), and 3 parts by mass of a polymerization initiator ("Trigonox 122-80C" by Kayaku Nouryon Corporation, 1,1-di(tert-amylperoxy) cyclohexane) were mixed to obtain a resin composition (R2) for prepreg.

### (Example 1: Production and evaluation of prepreg (1))

The resin composition (1) for prepreg was applied to one surface of a polyethylene terephthalate film which had been subjected to mold release treatment. Then, by a hand lay-up method, carbon fibers ("T-700-12K-50C" manufactured by Toray Industries, Inc.) were impregnated such that the carbon fiber content was 50% by mass. After the same film was placed thereon, aging was performed under the conditions of 25°C for one week, thereby producing a prepreg (1). The gel time of the prepreg (1) was 90 seconds at 100°C and 30 seconds at 110°C.

### [Evaluation of storage stability]

After the prepreg (1) was stored at 25°C for 4 weeks, the gel time at 110°C was measured, and storage stability was evaluated according to the following criteria:
○: The difference in gel time at 110°C between one week after production and 4 weeks after production was less than 5 seconds.
Δ: The difference in gel time at 110°C between one week after production and 4 weeks after production was 5 seconds or more and less than 10 seconds.
×: The difference in gel time at 110°C between one week after production and 4 weeks after production was 10 seconds or more.

### [Production of molded article]

12 Sheets of the prepreg (1) obtained as described above were stacked, and by using a plate-shaped mold, press molding under heating was performed to obtain a molded article. The heating and pressing conditions were as follows: the stacked sheets were maintained at a mold temperature of 105°C and a mold closing pressure of 4 MPa for 5 minutes, taken out after the mold was opened, and left to stand for cooling at normal temperature. In such a manner, a molded article (1) was obtained.

### [Evaluation of moldability]

The surface of the molded article (1) obtained as described above was evaluated according to the following criteria:
○: Blisters and uncured areas are not present.
×: Blisters or uncured areas are present.

### [Evaluation of flexural strength and flexural modulus of elasticity]

A specimen of 5 mm wide and 100 mm long was cut out from the molded article (1) obtained as described above, and flexural strength and flexural modulus of elasticity were measured in accordance with JIS K7074.

### [Evaluation of interlaminar shear strength]

A specimen of 10 mm wide and 22 mm long was cut out from the molded article (1) obtained as described above. The interlaminar shear strength of the specimen was measured in accordance with JIS K7078.

### (Comparative Example 1: Production and evaluation of prepreg (R1))

A prepreg (R1) was produced as in Example 1 except that the resin composition (1) for prepreg used in Example 1 was changed to the resin composition (R1) for prepreg, and the evaluations were made. The gel time of the prepreg (R1) was 300 seconds at 100°C and 110 seconds at 110°C. Note that, under the molding conditions described above, uncured areas occurred, and a molded article could not be obtained.

### (Comparative Example 2: Production and evaluation of prepreg (R2))

A prepreg (R2) was produced as in Example 1 except that the resin composition (1) for prepreg used in Example 1 was changed to the resin composition (R2) for prepreg, and the evaluations were made. The gel time of the prepreg (R2) could not be measured because curing did not proceed at 100 to 110°C, but was 50 seconds at 140°C. Note that, under the molding conditions described above, uncured areas occurred, and a molded article could not be obtained.

The evaluation results of the prepregs (1), (R1), and (R2) obtained as described above are shown in Table 1.

**[Table 1]**

| Table 1 | Example 1 | Comparative Example 1 | Comparative Example 2 |
|---|---|---|---|
| Prepreg | (1) | (R1) | (R2) |
| Polymerization initiator (B) (10-hour half-life temperature) | 1,1,3,3-tetramethylbutyl peroxy-2-ethylhexanoate (65°C) | tert-butyl peroxy-2-ethylhexanoate (72°C) | 1,1-di(tert-amylperoxy) cyclohexane (93°C) |
| Storage stability | ○ | ○ | Unmeasurable |
| Moldability | ○ | × | × |
| Flexural strength (MPa) | 1499 | Molded article not obtainable | Molded article not obtainable |
| Flexural modulus of elasticity (GPa) | 118 | Molded article not obtainable | Molded article not obtainable |
| Interlaminar shear strength | 78 | Molded article not obtainable | Molded article not obtainable |

It is confirmed that the prepreg of the present invention of Example 1 has excellent storage stability and moldability, and the resulting molded article has excellent strength.

On the other hand, in Comparative Examples 1 and 2, in which an alkyl peroxy ester compound having a 10-hour half-life temperature of 60°C or higher and lower than 70°C is not used as a polymerization initiator, it is confirmed that the prepreg is not cured at 100 to 110°C, and a molded article cannot be obtained.

## Claims

1. A prepreg comprising a urethane (meth)acrylate (A), a polymerization initiator (B), and reinforcement fibers (C), **characterized in that** the polymerization initiator (B) is an alkyl peroxy ester compound having a 10-hour half-life temperature of 60°C or higher and lower than 70°C.

2. The prepreg according to Claim 1, wherein the urethane (meth)acrylate (A) is a reaction product of a polyisocyanate (a1) and a hydroxyl group-containing compound (a2) having, as an essential starting material, a compound (a2-1) having a hydroxyl group and a (meth)acryloyl group.

3. The prepreg according to Claim 1 or 2, wherein the polyisocyanate (a1) includes polymethylene polyphenyl polyisocyanate.

4. The prepreg according to any one of Claims 1 to 3,
wherein the reinforcement fibers (C) are carbon fibers.

5. A molded article **characterized by** comprising a cured product of the prepreg according to any one of Claims 1 to 4 .
